# EUROPEAN PATENT SPECIFICATION

(11) **EP 0 894 696 B1**
(45) Date of publication and mention of the grant of the patent: **14.12.2005**
(21) Application number: 98306138.3
(22) Date of filing: 31.07.1998
(51) Int. Cl.: B62D 13/04, B62D 7/20

(54) **Steering correction mechanism**
Lenkwinkel-Korrekturmechanismus
Mécanisme de correction de l'angle de direction

(30) Priority: 02.08.1997 GB 9716341
(43) Date of publication of application: 03.02.1999
(73) Proprietor: Henderson, Stephen Carl, Richmond, North Yorkshire DL10 5EG (GB)
(72) Inventor: Henderson, Stephen Carl, Richmond, North Yorkshire DL10 5EG (GB)
(74) Representative: Finnie, Peter John

(56) References cited:
- US-A- 3 899 188
- US-A- 4 465 292

## Description

The present invention is concerned with the steering of wheeled vehicles and in particular with a mechanism which is devised to correct steering anomalies arising from movements in wheel suspension systems. The invention is applicable in general to the steering of various forms of road and off-road vehicles, including passenger vehicles, in which these steering anomalies can arise but it is of particular value as applied to steerable trailers and will therefore be described in greater detail with reference to such steerable trailers in particular.

It is a common feature of multi-axled vehicle trailers that, unless provision is made for allowing the wheels to pivot about individual or common generally vertical axes, excessive wear and tear on the vehicle tyres occurs when the trailer is towed around bends. Various proposals have been made, therefore, whereby trailer wheels are actively pivoted in this way, that is are steered, in response to steering of the towing vehicle. Typically, this steering is achieved by inducing a linear steering action, generally parallel to the length of the trailer, in response to relative angular movement of the towing vehicle and the trailer. By way of example, United States Patent Specification US 5207443 A describes and illustrates a trailer steering mechanism in which the length of a steering arm between two pivot points associated with the towing vehicle and the trailer respectively changes in response to the relative pivoting of the towing vehicle and trailer, simultaneously giving rise to an angular movement of the steering arm, which in turn steers a forward pair of trailer wheels.

However, many wheel suspension systems, in particular of the leaf spring type, are so structured that they pivot about a generally horizontal axis displaced forwardly or rearwardly of the wheel axle, in response to vertical movement of the wheel over irregularities in the surface of the roadway. The resultant swinging of the wheel axle about the horizontal pivot gives rise to a linear action in the trailer steering arm, which in turn may cause pivoting, that is undesired steering, of the wheel. This same effect may arise with domestic passenger vehicles or with commercial vehicles other than trailers but in those cases is readily compensated for by the vehicle driver applying corrective action to the steering wheel.

Specification US 4465292 describes a vehicle with a steering mechanism according to the preamble of claim 1, in which there is a compensating link connecting the steering control means and the axle, with the object of overcoming or reducing the disadvantage of steering motion attributable to relative movement of the chassis and axle.

It is an object of the present invention to provide a mechanism whereby such unwanted steering of a wheeled vehicle in response to irregularities in the roadway surface may be reduced or eliminated.

The steering mechanism according to the present invention comprises a steering link expending between a primary steering drive and a steering arm linked to a vehicle wheel, and is characterised by means to vary the spatial position, relative to the primary steering drive of either the connection of the steering link to the primary steering drive or the connection of the steering link to the steering arm in response to the vertical movement of the wheel, which means includes either a pivoted support for the connection or a mounting for linear movement of the connection along a slide or other confined linear space.

As indicated above, the steering mechanism of the present invention is of particular merit as applied to the steering of multi-axled trailers. An advantageous form of such a trailer comprises a sub-chassis pivotally linked about a generally vertical pivot to a main chassis associated with the towing vehicle. As the sub-chassis pivots relative to the main chassis in response to a change in the direction of movement of the towing vehicle, a steering link extending from the chassis is moved by the chassis longitudinally towards or away from a track arm or other means of pivoting the steerable wheel and thereby turns the wheel in the desired steering direction. However, normal vertical freedom of movement of the wheel in response to roadway irregularities, within the limits of the wheel suspension, may give rise to linear movement of the steering link, which potentially could divert the wheel from its desired steering direction. In the mechanism of the present invention, the point of connection of the steering link to the chassis or to the steering arm may move relative to the chassis or to the steering arm and thereby take up, and compensate for, the movement of the link caused by the wheel suspension, thus avoiding the undesired steering of the wheel.

In another form of known means for steering a multi-axled trailer, the steering of the trailer may be effected by means of one or more extended drive links operated from the point of pivoting of the trailer to the towing vehicle. In that case, the need for a trailer sub-chassis is dispensed with and the steerable wheels are steered by linear movement of the extended drive link(s) in response to the change in angle between the towing vehicle and the trailer. The mechanism of the present invention works in the same manner as described above in that movement of the steering link caused by the wheel suspension is compensated for by movement of the point of connection of the steering link to the primary steering drive or to the steering arm.

The moving of the point at which the steering link is connected to the steering device may be effected by means of a linear connecting link, extending from the wheel suspension to the steering link connection point. By way of example, the adjacent ends of the steering link and this connecting link may be mounted together upon a pivoted or sliding plate. The connecting link may be moved in response to pivotal generally vertical movement of the wheel suspension by mounting the end of the connecting link directly upon the wheel axle.

The invention will now be further described and illustrated, by way of example only, with reference to the accompanying drawings, wherein:-
Fig. 1 is a schematic plan view of a towed, three axle trailer according to the present invention; and
Fig. 2 is a schematic elevation of the trailer of Fig. 1.

The illustrated trailer comprises a main trailer body 10 pivotally supported upon a sub-chassis 11 via a turntable comprising an upper section 12 mounted upon the trailer body engaging a lower section 13 secured to the sub-chassis. The trailer has six wheels consisting of steerable front wheels 14, steerable rear wheels 15 and a pair of non-steerable wheels 16. The front wheels 14 are steered via a steering arm 17 pivoted with the left-hand wheel, in turn linked to the other front wheel by a track rod 18. The rear wheels 15 are steered in a similar manner via a steering arm 19 and track rod 20.

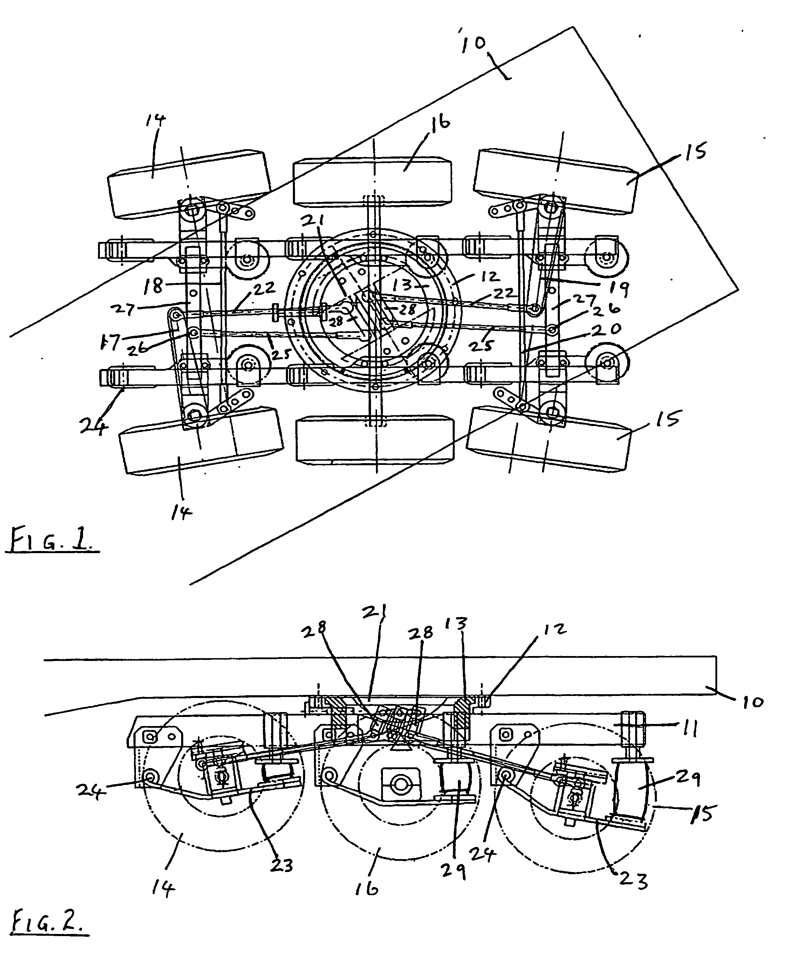

Depending downwardly from the turntable section 12 are a pair of parallel flanges 21. Thus when the main trailer body 10 is pivoted relative to the sub-chassis 11 as a result of the towing vehicle entering a bend, the flanges 21 swing with the trailer body 10 and thereby change their orientation relative to the sub-chassis 11, as seen in Fig. 1. The flanges 21 are joined via steering links 22 to the steering arms 17 and 19 respectively and thereby steer the respective pairs of wheels 14 and 15 to enable the trailer to follow the towing vehicle without tyre damage that could otherwise occur.

The wheels of the trailer are mounted upon axle support arms 23, which are pivoted on pivots 24 forward of the respective axles and are cushioned by air bags 29. Thus when one of the wheels passes over a mound or similar irregularity in the surface of the roadway, the associated wheel axle swings upwardly about the pivot 24, thereby imparting to the connected steering link 22 a longitudinal force which tends to cause the wheel to steer out of the desired alignment. According to the present invention, this tendency is counteracted by means of connecting links 25.

The links 25 extend generally in the same general direction as the respective steering links 22. Each connecting link 25 is mounted at one end by a pivotal mount 26 upon the associated wheel axle 27 and at its other end upon the flanges 21 of the turntable section 12. More specifically, a pair of rigid flaps 28 are pivoted about parallel generally horizontal axes between the flanges 21 and on each flap 28 are mounted the adjacent ends of a steering link 22 and a connecting link 25.

When a roadway irregularity causes one of the axles 27 to swing about the associated pivot 24, the resulting linear movement of the connecting link 25 causes the relevant flap 28 to pivot and thereby to move the adjacent end of the steering link 22 by a similar amount. In this way, the tendency of the steering link 22 to move the steering arm 17 in response to the movement in the wheel suspension is compensated for and any resulting undesired steering of the associated wheels is avoided.

## Claims

1. A steering mechanism for correcting steering anomalies in a wheeled vehicle (10) arising from generally vertical movement in a wheel suspension due to irregularities in a roadway surface, which mechanism comprises a steering link (22) extending between a primary steering drive (12, 21) and a steering arm (17,19) linked to a wheel (14,15,16) of the wheeled vehicle (10),
**characterised by** means (25,28) to vary the spatial position, relative to the primary steering drive (12,21), of either the connection of the steering link (22) to the primary steering drive (12,21) or the connection of the steering link (22) to the steering arm (17, 19) in response to the vertical movement of the wheel (14,15,16), which means includes either a pivoted support for the connection or a mounting for linear movement of the connection along a slide or other confined linear space.

2. A steering mechanism according to Claim 1, wherein the wheeled vehicle is a trailer (10) towed by a towing vehicle.

3. A steering mechanism according to Claim 2, wherein the primary steering drive comprises a trailer sub-chassis (11) pivotally linked about a generally vertical pivot to a main chassis associated with the towing vehicle.

4. A steering mechanism according to Claim 3, wherein the steering link (22) is connected to the main chassis via the means (28) to vary the spatial position of the connection.

5. A steering mechanism according to Claim 2, wherein the primary steering drive comprises one or more extended drive links operated from the point of pivoting of the trailer (10) to the towing vehicle.

6. A steering mechanism according to Claim 5, wherein the steering link (22) is connected to the primary steering drive (12,21) via the means (28) to vary the spatial position of the connection.

7. A steering mechanism according to Claim 3 or Claim 5, wherein the steering link (22) is connected to the steering arm (17,19) via the means (28) to vary the spatial position of the connection.

8. A steering mechanism according to any one of the preceding claims, wherein the varying of the spatial position is effected by means of a linear connecting link (25), extending from the wheel suspension (27) to the connection of the steering link (22) to the primary steering drive (12,21).

9. A steering mechanism according to Claim 8, wherein adjacent ends of the steering link (22) and of the linear connecting link (25) are mounted together upon a pivoted (28) or sliding plate.

10. A steering mechanism according to any one of the preceding claims, wherein one end of said linear connecting link (25) is mounted directly upon the wheel axle (27).

## Patentansprüche

1. Lenkmechanismus zur Korrigieren von Lenkabnormalitäten in einem Räderfahrzeug (10), die durch die im wesentlichen vertikale Bewegung in einer Radaufhängung auf Grund von Unebenheiten in einer Fahrbahnoberfläche entstehen, wobei der Mechanismus ein Lenkverbindungsglied (22) umfasst, das zwischen einem primären Lenkantrieb (12, 21) und einem Lenkarm (17, 19) verläuft, der mit einem Rad (14, 15, 16) des Räderfahrzeugs (10) gekoppelt ist,
**gekennzeichnet durch** ein Mittel (25, 28) zum Variieren der räumlichen Position relativ zu dem primären Lenkantrieb (12, 21) entweder für die Verbindung des Lenkverbindungsglieds (22) mit dem primären Lenkantrieb (12, 21) oder die Verbindung des Lenkverbindungsglieds (22) mit dem Lenkarm (17, 19) als Reaktion auf die vertikale Bewegung des Rades (14, 15, 16), wobei dieses Mittel entweder eine drehpunktgelagerte Halterung für die Verbindung oder eine Lagerung für die lineare Bewegung der Verbindung entlang einer Gleitbahn oder eines anderen eingeengten linearen Raums umfasst.

2. Lenkmechanismus nach Anspruch 1, wobei das Räderfahrzeug ein Anhänger (10) ist, der von einem Zugfahrzeug gezogen wird.

3. Lenkmechanismus nach Anspruch 2, wobei der primäre Lenkantrieb ein Anhänger-Unterfahrgestell (11) umfasst, das um einen im wesentlichen vertikalen Drehpunkt herum verschwenkbar mit einem dem Zugfahrzeug zugeordneten Hauptfahrgestell gekoppelt ist.

4. Lenkmechanismus nach Anspruch 3, wobei das Lenkverbindungsglied (22) über das Mittel (28) mit dem Hauptfahrgestell verbunden ist, um die räumliche Position der Verbindung zu variieren.

5. Lenkmechanismus nach Anspruch 2, wobei der primäre Lenkantrieb ein oder mehrere verlängerte Antriebsverbindungsglieder umfasst, die von dem Verschwenkungspunkt des Anhängers (10) zu dem Zugfahrzeug hin betätigt werden.

6. Lenkmechanismus nach Anspruch 5, wobei das Lenkverbindungsglied (22) über das Mittel (28) mit dem primären Lenkantrieb (12, 21) verbunden ist, um die räumliche Position der Verbindung zu variieren.

7. Lenkmechanismus nach Anspruch 3 oder Anspruch 5, wobei das Lenkverbindungsglied (22) über das Mittel (28) mit dem Lenkarm (17, 19) verbunden ist, um die räumliche Position der Verbindung zu variieren.

8. Lenkmechanismus nach einem der vorhergehenden Ansprüche, wobei das Variieren der räumlichen Position mit Hilfe eines linearen Verbindungsglieds (25) erfolgt, das von der Radaufhängung (27) zu der Verbindung des Lenkverbindungsglieds (22) mit dem primären Lenkantrieb (12, 21) verläuft.

9. Lenkmechanismus nach Anspruch 8, wobei benachbarte Enden des Lenkverbindungsglieds (22) und des linearen Verbindungsglieds (25) zusammen auf einer drehpunktgelagerten (28) oder verschieblichen Platte befestigt sind.

10. Lenkmechanismus nach einem der vorhergehenden Ansprüche, wobei ein Ende des linearen Verbindungsglieds (25) direkt auf der Radachse (27) befestigt ist.

## Revendications

1. Mécanisme de direction pour corriger les anomalies de direction d'un véhicule (10) à roues qui proviennent d'un déplacement globalement vertical de la suspension des roues suite aux irrégularités de la surface de la chaussée, lequel mécanisme comprend une liaison de direction (22) qui s'étend entre un entraînement primaire de direction (12, 21) et un bras de direction (17, 19) relié à une roue (14, 15, 16) du véhicule (10) à roues,
**caractérisé par** des moyens (25, 28) pour modifier la position spatiale par rapport à l'entraînement primaire de direction (12, 21) de la connexion entre la liaison de direction (22) et l'entraînement primaire de direction (12, 21) ou de la connexion entre la liaison de direction (22) et le bras de direction (12, 19) en réponse au déplacement vertical de la roue (14, 15, 16), lequel moyen comporte soit un support pivotant qui assure la connexion soit un montage de la connexion à déplacement linéaire le long d'un coulisseau ou d'un autre espace linéaire confiné.

2. Mécanisme de direction selon la revendication 1, dans lequel le véhicule à roues est une remorque (10) entraînée par un véhicule tracteur.

3. Mécanisme de direction selon la revendication 2, dans lequel l'entraînement primaire de direction comprend un sous-châssis (11) de remorque relié à un châssis principal associé au véhicule tracteur à pivotement autour d'un pivot globalement vertical.

4. Mécanisme de direction selon la revendication 3, dans lequel la liaison de direction (22) est reliée au châssis principal par l'intermédiaire des moyens (28) qui modifient la position spatiale de la liaison.

5. Mécanisme de direction selon la revendication 2, dans lequel l'entraînement primaire de direction comprend une ou plusieurs liaisons d'entraînement étendues qui sont actionnées depuis le point de pivotement de la remorque (10) sur le véhicule tracteur.

6. Mécanisme de direction selon la revendication 5, dans lequel la liaison de direction (22) est reliée à l'entraînement primaire de direction (12, 21) par l'intermédiaire du moyen (28) qui modifie la position spatiale de la liaison.

7. Mécanisme de direction selon la revendication 3 ou la revendication 5, dans lequel la liaison de direction (22) est reliée au bras de direction (17, 19) par l'intermédiaire du moyen (28) qui modifie la position spatiale de la liaison.

8. Mécanisme de direction selon l'une quelconque des revendications précédentes, dans lequel la modification de la position spatiale est réalisée au moyen d'une liaison de connexion linéaire (25) qui s'étend depuis la suspension de roue (27) et la connexion de la liaison de direction (22) jusqu'à l'entraînement primaire de direction (12, 21).

9. Mécanisme de direction selon la revendication 8, dans lequel des extrémités adjacentes de la liaison de direction (22) et de la liaison de connexion linéaire (25) sont montées ensemble sur un plateau pivotant (28) ou sur un plateau coulissant.

10. Mécanisme de direction selon l'une quelconque des revendications précédentes, dans lequel une extrémité de ladite liaison de connexion linéaire (25) est montée directement sur l'essieu de roue (27).
